(19) Europäisches Patentamt
European Patent Office
Office européen des brevets

(11) **EP 1 083 433 B1**

(12) **EUROPÄISCHE PATENTSCHRIFT**

(45) Veröffentlichungstag und Bekanntmachung des Hinweises auf die Patenterteilung:
**06.05.2009 Patentblatt 2009/19**

(51) Int Cl.:
***G01R 29/06*** *(2006.01)*

(21) Anmeldenummer: **00116071.2**

(22) Anmeldetag: **27.07.2000**

(54) **Verfahren zur Messung der Aussteuerung von Frequenzmodulierten Sendern**

Method for measuring the modulation depth of a frequency modulated transmitter

Procédé pour mesurer le taux de modulation d'un transmetteur modulé en fréquence

(84) Benannte Vertragsstaaten:
**AT BE CH CY DE DK ES FI FR GB GR IE IT LI LU MC NL PT SE**

(30) Priorität: **10.09.1999 DE 19944900**

(43) Veröffentlichungstag der Anmeldung:
**14.03.2001 Patentblatt 2001/11**

(73) Patentinhaber: **Deutsche Telekom AG**
**53113 Bonn (DE)**

(72) Erfinder:
• **Ottensmann, Jürgen**
**33813 Oerlinghausen (DE)**
• **Althoff, Jürgen**
**48429 Rheine (DE)**
• **Müller, Wolf-Rüdiger**
**59439 Holzwickede (DE)**

(56) Entgegenhaltungen:
**DD-A- 267 115**　　　　**GB-A- 955 555**
**US-A- 2 276 672**　　　**US-A- 2 496 259**
**US-A- 2 683 253**

**Beschreibung**

Die Erfindung betrifft das Gebiet der Messung von Frequenzhub bzw. Modulationsleistung für frequenzmodulierte Sender.

Nach dem Stand der Technik werden Frequenzhub bzw. Modulationsleistung bei FM-Sendern durch Messung des ausgesendeten HF-Signals ermittelt. Dabei wird der Frequenzhub durch Zählen der Periodendauer jeder einzelnen Schwingung des HF-Trägers bestimmt (siehe DE 4321149). Ein anderes Verfahren basiert auf der Frequenzmessung am Ausgang des FM-Modulators (siehe DE 3126804). Dazu ist auch ein digitales Verfahren bekannt (siehe DE 19534262). **Ferner ist aus** DD 267 115 A1 **ein digital anzeigender Frequenz-hubmesser mit automatischer Eichung bekannt, mit welchem empfangsseitig der Frequenzhub eines HF-Signals gemessen werden kann.**

Zur Vermeidung möglicher Störungen anderer Sender in Gleich-oder Nachbarkanälen sind für den FM-Tonrundfunk Schutzabstandskurven vereinbart worden (siehe Empfehlung ITU-R BS.412). Sie beruhen auf einen maximal zulässigen Spitzenhub ($\pm 75$ kHz) und die über einen bestimmten Intervall (60s) gemittelte Modulationsleistung, die bei Modulation mit einem sinusförmigen Signal einen Frequenzhub von $\pm 19$ kHz verursacht.

Die bekannten Verfahren zur Bestimmung von Frequenzhub bzw. Modulationsleistung haben den Nachteil, daß Überschreitungen der Grenzwerte erst im nachhinein durch Messung am Frequenzmodulator bzw. des ausgestrahlten und mit einem Meßempfänger empfangenen Sendesignals ermittelt werden.

Das mit dieser Erfindung vorgelegte Verfahren geht davon aus, daß die Beziehung zwischen Modulationssignal und dem Frequenzhub des FM-Modulators für eine Einflußnahme auf die Parameter vor Ausstrahlung des modulierten HF-Trägersignals genutzt wird. Die Einhaltung der Grenzwerte für Frequenzhub/Modulationsleistung kann somit direkt am Studioausgang und damit durch den Programmanbieter selbst beurteilt werden. Überschreitungen der Grenzwerte sind von vornherein vermeidbar und Kosten können eingespart werden.

Das Verfahren arbeitet wie folgt:

Die Amplitude und die Frequenz des Studioausgangssignals (Multiplexsignal) stehen in direktem Zusammenhang mit dem vom FM-Modulator des Senders erzeugten Frequenzhub $\Delta f$ (t). Wird mit einem sinusförmigen Signal moduliert, ist - bei konstanter Amplitude - jeder Frequenz ein definierter Frequenzhub zuzuordnen. Bei der Modulation mit einem Frequenzgemisch aus überlagerten nichtharmonischen Anteilen, wie es das Studioausgangssignal darstellt, trifft das Superpositionsgesetz nicht zu. Es ist also nicht möglich, aus dem FM-Spektrum bei sinusförmiger Modulation auf die Spektren bei beliebigen Modulationssignalen zu schließen. Daher wird ein "normiertes" Verfahren angewendet, das für die Praxis hinreichend genaue Ergebnisse liefert.

Zwischen dem Signalpegel u(t) des Modulationssignals (Multiplexsignal) und dem Frequenzhub $\Delta$f(t) des FM-Modulators gilt folgende normierte Beziehung (siehe Richtlinie 176 TR 28):

$$\Delta f(t) \quad = \frac{u(t).40kHz}{U_0}$$

Dabei ist $U_0$ der Signalpegel, der zu einem Frequenzhub von 40 kHz führt.

Der lineare Zusammenhang zwischen der Modulationsspannung und dem Frequenzhub wird dazu verwendet, um durch eine Pegelmessung am Studioausgang den Frequenzhub des FM-Modulators zu bestimmen.

Das Modulationssignal am Studioausgang enthält alle Stereo-Informationen und auch den Pilotton. Am Senderstandort werden weitere Multiplexkomponenten wie Verkehrsfunk-, RDS-Signal und andere hinzugefügt. Da der Frequenzhub zu deren Pegelanteile ebenfalls proportional ist, können die Anteile additiv berücksichtigt werden.

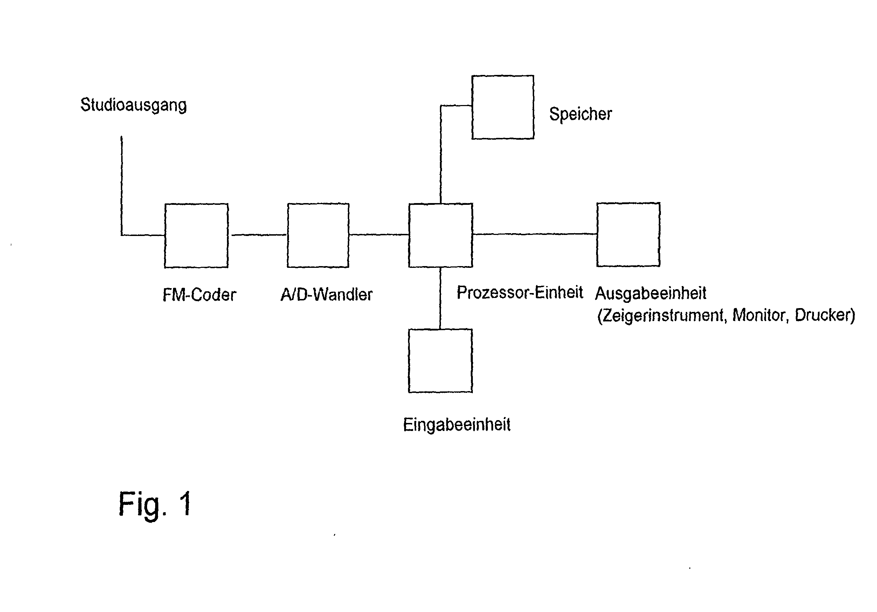

In Figur 1 ist eine Schaltungsanordnung als Ausführungsbeispiel dargestellt.

Die Messanordnung nimmt am Eingang den Signalpegel eines FM-Coders auf, der eingangsseitig mit den Studioausgangssignalen beschaltet ist. Dieser Wert wird mit einer geeigneten Abtastrate über einen A/D-Wandler in eine Folge pegelrepräsentierender Zahlenwerte umgewandelt. Zu diesen Werten können weitere Anteile bekannter Multiplexsignalanteile addiert werden, deren Pegelbeiträge konstant sind, wenn die Einspeisung nicht im Studio erfolgt (z.B. RDS-Coder).

Aus der Folge umgewandelter Pegelwerte wird, bezogen auf ein festgelegtes Zeitintervall (z.B. 60s) der arithmetische Mittelwert gebildet. Aufgrund des Zusammenhangs zwischen mittlerem Pegelwert und allen im Zeitintervall aufgetretenen Frequenzhubwerten kann für das Intervall ein mittlerer Frequenzhub errechnet werden, der die Frequenzhubbestimmung ermöglicht.

**Patentansprüche**

1. Verfahren zur Messung der Aussteuerung von frequenzmodulierten Sendern, bei denen die Abhängigkeit zwischen dem vom Frequenzmodulator des Senders erzeugten Frequenzhub von den Parametern der zugeführten Modulationsspannung für die Bestimmung des Frequenzhubs des Senders genutzt wird,
**dadurch gekennzeichnet,**
**dass** am Studioausgang der Signalpegel der Modulationsspannung gemessen und eingestellt wird,
**dass** mit der Einstellung der Modulationsspannung am Studioausgang der Frequenzhub des Senders vor dem Modulationsvorgang festgelegt wird und **dass** durch eine stetige Messung der Modulationsspannung am Studioausgang der Frequenzhub des Senders überwacht werden kann, so dass Frequenzhubüberschreitungen nicht auftreten können.

**2.** Verfahren nach Anspruch 1, **dadurch gekennzeichnet, dass** der lineare Zusammenhang zwischen dem Signalpegel der Modulationsspannung am Studioausgang und dem Frequenzhub des Senders durch eine normierte Beziehung, bezogen auf das Verhältnis eines Frequenzhubs von 40 kHz zu der für diesen Frequenzhub erforderlichen Modulationsspannung, dargestellt werden kann und dass die normierte Beziehung für die Einstellung und Überwachung des Frequenzhubs des Senders hinreichende Ergebnisse liefert.

**Claims**

**1.** Method for measuring the modulation of frequency-modulated transmitters, wherein the dependence of the frequency deviation produced by the frequency modulator of the transmitter on the parameters of the applied modulating voltage is utilized to determine the frequency deviation of the transmitter, **characterized in that** the signal level of the modulating voltage at the studio output is measured and set, **in that** the frequency deviation of the transmitter is determined with the setting of the modulating voltage at the studio output before the modulation process, and **in that** the frequency deviation of the transmitter can be monitored by continuous measurement of the modulating voltage at the studio output, so that frequency deviation exceedances cannot occur.

**2.** Method according to claim 1, **characterized in that** the linear relationship between the signal level of the modulating voltage at the studio output and the frequency deviation of the transmitter can be represented by a standardized relationship based on the ratio of a frequency deviation of 40 KHz to the modulating voltage required for this frequency deviation, and **in that** the standardized relationship provides results sufficient for setting and monitoring the frequency deviation of the transmitter.

**Revendications**

**1.** Procédé de mesure du taux de modulation d'émetteurs modulés en fréquence qui utilisent la relation entre l'excursion de fréquence générée par le modulateur de fréquence de l'émetteur et les paramètres de la tension de modulation appliquée pour déterminer l'excursion de fréquence de l'émetteur, **caractérisé**
**en ce que** le niveau de signal de la tension de modulation est mesuré et réglé en sortie de studio,
**en ce que** le réglage de la tension de modulation en sortie de studio détermine l'excursion de fréquence de l'émetteur avant l'opération de modulation et
**en ce qu'**une mesure continue de la tension de modulation en sortie de studio permet de surveiller l'excursion de fréquence de l'émetteur de manière à empêcher l'apparition de dépassements d'excursion de fréquence.

**2.** Procédé selon la revendication 1, **caractérisé en ce que** le rapport linéaire entre le niveau de signal de la tension de modulation en sortie de studio et l'excursion de fréquence de l'émetteur peut être représenté par une relation normalisée, relative au rapport d'une excursion de fréquence de 40 kHz à la tension de modulation nécessaire à cette excursion de fréquence, et **en ce que** la relation normalisée fournit suffisamment de résultats pour le réglage et la surveillance de l'excursion de fréquence de l'émetteur.

Studioausgang

Speicher

FM-Coder  A/D-Wandler  Prozessor-Einheit  Ausgabeeinheit
(Zeigerinstrument, Monitor, Drucker)

Eingabeeinheit

## Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4321149
- DE 3126804
- DE 19534262
- DD 267115 A1